# EUROPÄISCHE PATENTSCHRIFT

(11) **EP 0 810 423 B1**
(45) Veröffentlichungstag und Bekanntmachung des Hinweises auf die Patenterteilung: **12.03.2003**
(21) Anmeldenummer: 97108197.1
(22) Anmeldetag: 21.05.1997
(51) Int. Cl.: G01F 23/296, B06B 1/02

(54) **Vibrationsresonator zur Füllstandsauswertung**
Vibrational resonator for liquid level evalution
Résonateur vibrant pour détection de niveau

(30) Priorität: 29.05.1996 DE 19621449
(43) Veröffentlichungstag der Anmeldung: 03.12.1997
(73) Patentinhaber: VEGA Grieshaber KG, 77709 Wolfach (DE)
(72) Erfinder: Raffalt, Felix, 77716 Fischerbach (DE); Benz, Karl, 77761 Schiltach (DE); Huber, Gerhard, 77709 Wolfach (DE)
(74) Vertreter: Patentanwälte Westphal, Mussgnug & Partner

(56) Entgegenhaltungen:
- EP-A- 0 079 422
- WO-A-92/21945
- DE-A- 3 044 354
- DE-A- 3 808 481
- DE-A- 4 327 167
- US-A- 4 578 650
- US-A- 4 644 789

## Beschreibung

Die Erfindung betrifft einen Vibrationsresonator zur Füllstandsauswertung nach dem Oberbegriff des Anspruchs 1. Ein solcher Vibrationsresonator ist z.B. aus WO 9221945 A bekannt.

Vibrations-Füllstand-Grenzschalter enthalten als Sensorenelement einen Vibrationsresonator, welcher beispielsweise als Gabel- oder Rohrschwinger zur Detektion flüssiger oder pulverartiger Medien in der industriellen Füllstandsmeßtechnik eingesetzt wird. Aus den weiteren Dokumenten DE 39 31 45 C1, DE 30 44 354 A, DE 42 03 715 A1, DE 42 32 719 A1, und DE 44 49 879 C1 sind solche Vorrichtungen ebenfalls bekannt, mit denen das Erreichen eines vorbestimmten Füllstandes in einem Behälter festgestellt werden kann. Diese auch als Grenzstandgeber, Grerizschalter oder Vibrationsfüllstandsensoren bezeichneten Vorrichtungen lösen bei bestimmten Füllhöhen Schaltbefehle aus. Sie können als Maximum- oder Minimumschalter eingesetzt werden. Maximumschalter verhindern beispielsweise das Überfüllen von Behältern durch Abschalten der Fördereinrichtung. Minimumschalter erzeugen dagegen bei Absinken des Füllgutes unter einen vorbestimmten Minimalstand Schaltbefehle. Solche Minimumschalter werden of als Trockenlaufschutz für Fördereinrichtungen eingesetzt. Ein Vibrationsresonator zur Ausblendung von ungewollten Spitzen in der Detektorsignalen ist aus US-A-4578650 bekant.

Im allgemeinen weisen bekannte Vorrichtungen zwei oder mehrere in den Behältern ragende Schwingstäbe auf, die in einer vorbestimmten Höhe des Behälters angeordnet werden. Die Schwingstäbe sind Bestandteil eines Vibrationsresonators, also eines mechanischen Schwingungssystemes. An der ihrem distalen Ende abgewandten Seite sind die Schwingstäbe an einer Membran, die an ihrem Rand eingespannt ist, befestigt.

Auf der den Schwingstäben abgewandten Seite der Membran ist eine Piezoeinrichtung angeordnet, um die Schwingstäbe einerseits zu erregen und andererseits deren Schwingungen zu detektieren. Bei den bisher bekannten Vorrichtungen besteht die Piezoeinrichtung regelmäßig aus in ihrer Funktion voneinander völlig getrennten Erregungs- und Empfangswandlern mit mindestens jeweils einem piezoelektrischen Element.

Die Amplitude der vom Erregungswandler aufgrund der angelegten Wechselspannung hervorgerufenen Schwingungen wird durch den Empfangswandler erfaßt, der die mechanischen Schwingungen der Schwingstäbe und der Membran in ein elektrisches Ausgangssignal umwandelt. Damit dieses elektrische Ausgangssignal der elektronischen Steuer- und Auswerteeinheit zugeführt werden kann, müssen die beiden Elektroden des Empfangswandlers, an denen das Ausgangssignal des Empfangswandlers abgreifbar ist, über zwei weitere Leitungsdrähte mit der elektronischen Steuer- und Auswerteeinheit verbunden sein. Das in der Steuer- und Auswerteeinheit an den beiden Leitungsdrähten abgreifbare Signal ist ein Maß zur Feststellung, ob der Behälter bis zur Höhe der darin angeordneten Schwingvorrichtung gefüllt ist.

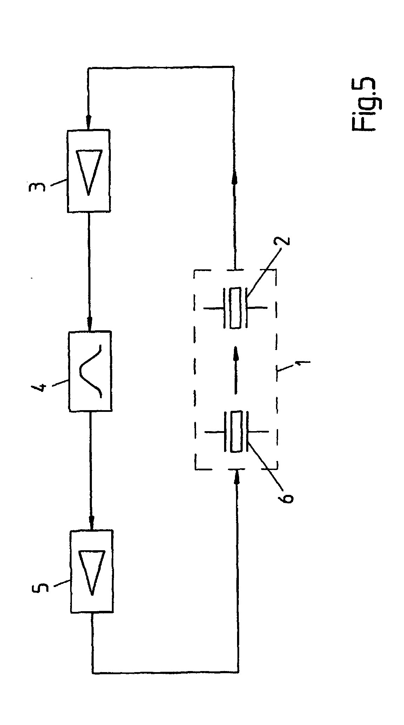

Ein vereinfachtes Blockschaltbild eines bekannten Grenzschalters gemäß dem Stand der Technik ist in Figur 5 dargestellt. Ein derartiger Grenzschalter gibt im wesentlichen die prinzipiellen Anordnungen für Grenzschalter gemäß der DE 42 32 719 A1 oder der DE 44 39 879 C1 wieder.

Der Vibrationsresonator ist mit 1 bezeichnet, welcher ein Erreger-Piezoelement 6 und ein Detektions-Piezoelement 2 enthält.

Das Ausgangssignal des Vibrationsresonators 1 wird einem Eingangsverstärker 3 zugeführt. Das vom Eingangsverstärker verstärkte Signal gelangt über ein Bandfilter 4 zum Eingang eines Endverstärkers 5, dessen Ausgang mit dem Eingang des Vibrationsresonators 1 verbunden ist.

Die Schwingungen des Vibrationsresonators 1 werden vom Piezoelement 2 detektiert und in ein elektrisches Signal gewandelt, welches dann vom Eingangsverstärker 3 verstärkt wird. Das Bandfilter 4 dient dazu, die Grundwellenschwingungen des Ausgangssignals des Vibrationsresonators 1 herauszufiltern. Diese Grundwellenschwingung wird vom Endverstärker 5 verstärkt und dieser steuert das Erreger-Piezoelement 6 an, welches den Vibrationsresonator 1 antreibt.

In Figur 5 ist lediglich jeweils ein einzelnes Piezoelement 2 und 6 dargestellt. Anstelle eines einzelnen Piezoelementes werden in der Praxis häufig mehrere mechanisch in Reihe geschaltete Piezoelemente verwendet, um eine für die Anwendung ausreichende Antriebsamplitude zu erhalten, denn Sensoren, die auf Vibrationsresonatoren basieren, bedürfen systembedingt der Schwingungserregung. Da sie infolge von Füllgutkontakt dem Schwingungsenergieabfluß unterliegen, kann ein dem Schwingelement zugeführtes Mindestmaß an Antriebsenergie nicht unterschritten werden.

Nachteilig an diesen bekannten Vorrichtungen ist, daß für Antrieb und Detektion stets getrennte Signalwege vorgesehen werden, die zwischen der Resonatoreinrichtung und der elektronischen Steuer- und Auswerteeinheit mindestens drei, aus Gründen der Störfestigkeit in der Praxis jedoch vier, Zuleitungsdrähte erforderlich macht. Außerdem sind bei den bekannten Vorrichtungen die Erregungs- und Empfangswandler jeweils separat durch eigene piezoelektrische Elemente realisiert. Die piezoelektrischen Elemente des Erregungswandlers müssen von den piezoelektrishen Elementen des Empfangswandlers elektrisch isoliert werden, was zusätzlichen Herstellungsaufwand bedeutet. Die hohe Anzahl von Teilen und Leitungen bei den bekannten Vorrichtungen erhöht die Gefahr von Fertigungsfehlern und senkt sowohl die Gesamtzuverlässigkeit als auch den Gesamtwirkungsgrad eines derartigen Sensorsystemes, insbesondere bei Hochtemperaturanwendungen. Vor allem erhöht im Kraftverlauf zwischen dem Antriebspiezo und der Membran jedes eingesparte mechanische Teil und jede eingesparte mechanische Wegstrecke den Antriebswirkungsgrad, da das Piezoelement nur äußerst geringen Antriebshub zur Verfügung stellen kann und jedes im Kraftverlauf zwischengeschaltete Element einen Teil des Hubes aufzehrt. Solche hubaufzehrenden Elemente, die bislang unverzichtbarer Bestandteil von Piezoantriebs- und detektionsstapeln waren, sind Isolierzwischenlagen, Elektrodenzwischenlagen und Detektionspiezos und vor allem die bezüglich Langzeitstabilität undefinierbaren Grenzflächen zwischen den vorgenannten Stapelelementen. Auch jeder Teil eingesparter Wegstrecke der kraftübertragenden Zug- und Druckbolzen, deren Länge durch die Baulänge des Piezo-Antriebs-/Detektionsstapels festgelegt ist, vermeidet Antriebsamplitudenverluste. Schließlich schafft die reduzierte Baulänge einer Zweipol-Piezoantriebs-/Detektionsbaugruppej auch die Voraussetzung für eine verringerte Baulänge des die Piezobaugruppe umschließenden Edelstahl-Einschub-/Befestigungsteils und somit Material- und Kosteneinsparungen.

Ein weiterer Nachteil ergibt sich bei der Verwendung bisher bekannter Systeme im explosionsgefährdeten Bereich. Dort müssen Piezoelemente stringent gegen die Gefahr von infolge mechanischer Stöße verursachter Spannungsspitzen abgesichert werden. Hierzu sind für jedes Anschlußleitungspaar dreifach ausgeführte antiserielle Z-Dioden-Schutzschaltungen vorgeschrieben, die neben einer Erhöhung des Herstellaufwandes der bekannten Vorrichtungen auch nachteiligerweise eine Volumenvergrößerung zur Folge haben.

Der vorliegenden Erfindung liegt die Aufgabe zugrunde, einen Vibrationsresonator zur Füllstandsauswertung anzugeben, der im Vergleich zu den bisher bekannten Vibrationsresonatoren erheblich einfacher aufgebaut ist und dadurch eine geringe Störanfälligkeit aufweist.

Diese Aufgabe wird durch einen Vibrationsresonator mit den Merkmalen des Anspruchs 1 gelöst.

Weiterbildende Merkmale sind in den sich jeweils anschließenden abhängigen Unteransprüchen angegeben.

Der erfindungsgemäße Vibrationsresonator zur Füllstandauswertung besteht im wesentlichen aus einem an einer Halterung angebrachten mechanischen Schwingungssystem, das mindestens zwei Schwingstäbe aufweist, die im Abstand zueinander an einer am Rand festgelegten Membran befestigt sind. Auf der den Schwingstäben abgewandten Seite der Membran ist eine als elektrischer Zweipol ausgebildete Piezoeinrichtung angeordnet, die sowohl zur Erregung der Schwingstärke als auch zur Detektion der Schwingungen der Schwingstäbe vorgesehen ist. Die als Zweipol ausgebildete Piezoeinrichtung weist mindestens ein Piezoelement mit zwei Elektroden auf, welche über jeweils eine Leitungsader einer Zweidrahtleitung mit einer elektronischen Steuer- und Auswerteeinheit verbunden sind.

Im Gegensatz zu bisher bekannten Vorrichtungen ist der entscheidende Unterschied bei der Vorrichtung nach der Erfindung darin zu sehen, dass die Piezoeinrichtung lediglich zwei Anschlüsse, über die das in der Piezoeinrichtung vorzusehende mindestens eine Piezoelement mit der Steuer- und Auswerteeinheit elektrisch verbunden ist, benötigt. Die Erfindung beruht auf der Erkenntnis, dass es nicht zwingend notwendig ist, separate Erregungs- und Empfangswandler mit jeweils eigenen Piezoelementen vorzusehen. Es ist vielmehr auch möglich, ein und dasselbe Piezoelement, bei geschickter Ansteuerung und Auswertung druch die Steuer- und Auswerteeinheit, sowohl zur Schwingungserregung als auch zur Schwingungsdetektion heranzuziehen. Damit beschreitet die vorliegende Erfindung eines Vibrationsresonators zur Füllstandsauswertung mit einem Zweipol zur Schwingungserregung und Schwingungsdetektion eine völlig neuen Weg bei der Realisierung von Vibrationsfüllstandsensoren.

Vorteilhaft bei der vorliegenden Erfindung ist die im Vergleich zu den bisher bekannten Vibrationsresonatoren erhebliche Reduzierung an notwendigen Komponenten, da anstelle der bisher üblichen vier Zuleitungen nur zwei Zuleitungen notwendig sind und auch die Anzahl der notwendigen Piezoelemente erheblich reduziert ist. Durch die Verwendung lediglich eines einzigen Piezoelementes verringern sich auch die zuvor erwähnten Schutzmaßnahmen erheblich. Außerdem wird die Fehleranfälligkeit des Systems verringert. Durch die Verringerung der notwendigen Bauelementenanzahl kann das Volumen des Vibrationsresonators ebenfalls reduziert werden.

Aufgrund des kompakten Aufbaus eines derartigen aus nur noch wenigen Teilen bestehenden Vibrationsresonators ergibt sich ein sehr hoher Wandlungswirkungsgrad, der es gestattet, je nach verwendetem Vibrationsresonator auf die bisher benötigte mechanische Reihenschaltung mehrerer Antriebselemente zu verzichten oder zumindest diese in der Anzahl wesentlich zu reduzieren.

Obwohl es mit dem vorliegenden Vibrationsresonator nach der Erfindung ohne weiteres möglich ist, als Antriebss/Detektionseinrichtung lediglich ein einziges Piezoelement einzusetzen, kann bei Bedarf der Zweipol durch weitere Piezoelemente ergänzt werden. Im Sinne der Erfindung ist es lediglich notwendig, dass alle Piezoelemente mit ihren Elektroden elektrisch parallel und mechanisch in Reihe geschaltet sind. Hierdurch können beispielsweise die Antriebskräfte im Vergleich zu einem einzigen Piezoelement deutlich erhöht werden.

In einer Weiterbildung der Erfindung ist der Vibrationsresonator an eine Steuer- und Auswerteeinheit, die über die erwähnte Zweidrahtleitung zum Antriebs-/Detektionszweipol sowohl die Schwingungserregung als auch die Schwingungsdetektion an der Membran und damit an den Schwingstäben herbeiführt, angeschlossen.

In einer bevorzugten Weiterbildung der Erfindung ist es vorgesehen, dass das Piezoelement oder die Piezoelemente als ringförmige Piezoelemente mit ringförmigen Elektroden ausgebildet sind. Innerhalb der Halterung des Vibrationsfüllstandsensors kann so ein Zugbolzen angeordnet werden, der sich orthogonal zur Membran erstreckt und mit seinem unteren Ende zentrisch an der Membran mit dieser feststehend verbunden ist. Der Zugbolzen ragt durch das oder die ringfrömigen Piezoelemente mit den ringförmigen Elektroden und ist an seinem oberen Ende mittig an einer Druckplatte angekoppelt. Das oder die ringförmigen Piezoelemente werden zweckmäßigerweise zwischen einer beabstandet über der Membran feststehenden Bodenplatte und der Druckplatte angeordnet. Sofern der Zugbolzen axial verschieblich und verschwenkbar angeordnet ist, läßt sich eine Entkopplung der Unterseite des Piezoelementes von der Membran erreichen, wodurch eine verbesserte Betriebsweise gewährleistet ist. Die Entkopplung der Unterseite des Piezoelementes von der Membran ist insbesondere antriebsseitig positiv, da die Membran durch die genannte Entkopplung frei schwingen kann und nicht durch Auflagen oder Verschraubungen bedämpft wird. Es wirkt lediglich der in der Resonanzfrequenz der Schwinggabel über das Piezoelement oder die Piezoelemente angetriebene Zugbolzen auf die Membran.

Eine Weiterbildung der Erfindung sieht vor, die Bodenplatte, auf der die Unterseite des Piezoelementes oder die Unterseite eines Stapeles von Piezoelementen aufsitzt, einstückig an der Halterung der erfindungsgemäßen Vorrichtung anzuformen. Die Halterung wird hierbei zweckmäßigerweise als Einschraubstück mit Außengewinde gebildet. Durch die einstückige Anformung der Bodenplatte an das Einschraubstück läßt sich die erfindungsgemäße Vorrichtung in besonders einfacher Weise herstellen.

Wird der Zugbolzen an seinem der Membran abgewandten Ende mit einem Gewinde versehen, auf welchem ein sich an einer Druckplatte abstützendes Schraubelement aufgeschraubt ist, kann in einfacher Weise eine vorgegebene Vorspannung an der Membran eingestellt werden.

Durch die Verwendung lediglich eines Piezoelementes werden vorteilhafterweise auch nur zwei Leitungen zum Anschluß des Sensors benötigt. Dadurch verringern sich die zuvor erwähnten Schutzmaßnahmen erheblich. Außerdem wird die Fehleranfälligkeit des Systems verringert.

Aufgrund des kompakten Aufbaus eines derartigen aus nur noch wenigen Teilen bestehenden erfindungsgemäßen Antriebsystems ergibt sich ein sehr hoher Wandlungswirkungsgrad, der es gestattet, je nach verwendetem Vibrationsrsonator auf die bisher benötigte mechanische Reihenschaltung mehrerer Antriebselemente zu verzichten oder diese in der Anzahl wesentlich zu reduzieren. Es ergibt sich daher eine deutliche Einsparung an Kosten und Bauvolumen.

Die benötigte Ladestromregelschaltung kann in einfacher Weise durch eine Schaltung zur Erzeugung eines virtuellen Massepotentials, welche ausgangskreisseitig mit dem Piezoelement verbunden wird, realisiert werden.

Zur Trennung von Antriebs- und Detektionssignal kann zusätzlich eine Schaltung, die die im Ausgangskreis des Piezoelements entstehenden Signalspitzen austastet, vorgesehen werden. Als besonders vorteilhaft erweist sich hier die Verwendung eines Umschalters, der für den Zeitraum des Ladestromes das Detektionssignal ausblendet und statt dessen mit Masse verbindet. Die Erregungs-Ladungsquanten können so wirksam von den zur Detektion herangezogenen Ladungsquanten getrennt werden.

Ein weiterer Vorteil ergibt sich durch einfaches Parallelschalten eines Widerstandes zum Piezoelement und einer zugehörigen Kompensationsschaltung. Tritt zum Beispiel eine Leitungsunterbrechung oder eine Beschädigung des Piezoelements auf, so wird die Resonanzfrequenz des gesamten Schwingkreises auf einen außerhalb eines vorgegebenen Standardbereichs liegenden Wert verschoben, der auf einfache Weise als Fehlersignal detektierbar ist.

Die Erfindung wird nachfolgend im Zusammenhang mit Ausführungsbeispielen und Figuren näher erläutert. Es zeigen:
- Figur 1:: ein Blockschaltbild eines erfindungsgemäßen Vibrations-Füllstand-Grenzschalters,
- Figur 2:: den zeitlichen Verlauf mehrerer Signale der in Figur 1 dargestellten Schaltung,
- Figur 3:: eine Erweiterungsschaltung der in Figur 1 dargestellten erfindungsgemäßen Schaltung,
- Figur 4:: eine vereinfachte Schaltung der in Figur 1 dargestellten erfindungsgemäßen Schaltung,
- Figur 5:: ein Blockschaltbild eines Vibrations-Füllstand-Grenzschalters nach dem Stand der Technik,
- Figur 6:: eine Längsschnittansicht durch einen ersten erfindungsgemäßen Vibrationsresonator zur Füllstandauswertung mit einem einzigen Piezoelement,
- Figur 7:: einen Auschnitt aus einer Halterung eines weiteren Ausführungsbeispiels eines erfindungsgemäßen Vibrationsresonators mit drei elektrisch parallel und mechanisch in Reihe geschalteten Piezoelementen,
- Figur 8:: eine Längsschnittansicht durch einen dritten Vibrationsresonator nach der Erfindung, und
- Figur 9:: eine Längsschnittansicht durch einen vierten Vibrationsresonator nach der Erfindung.

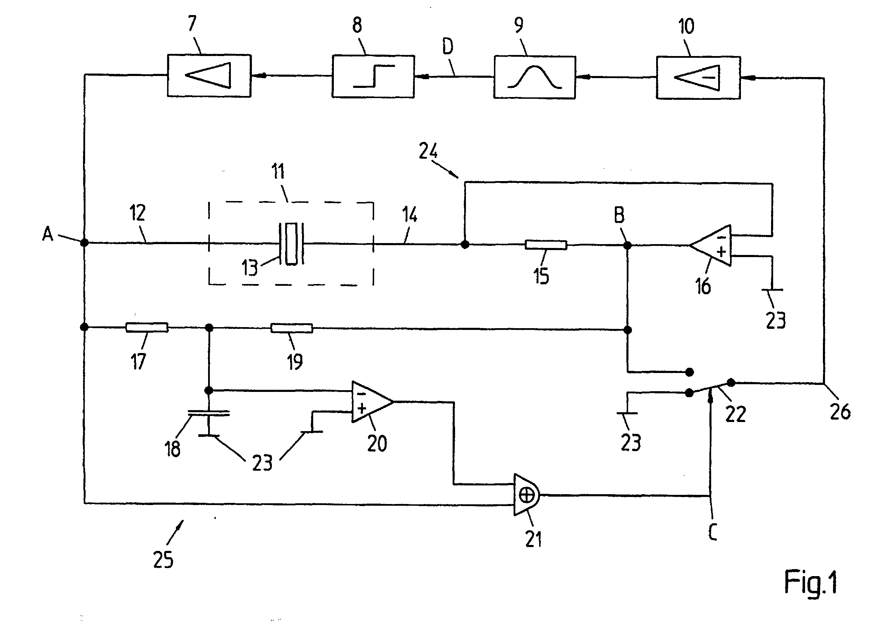

Im nachfolgenden Ausführungsbeispiel von Figur 1 ist als Erreger- und Detektionselement ein einziges Piezoelement gewählt. Dieses kann selbstverständlich durch einen äquivalent wirkenden Wandler ersetzt werden.

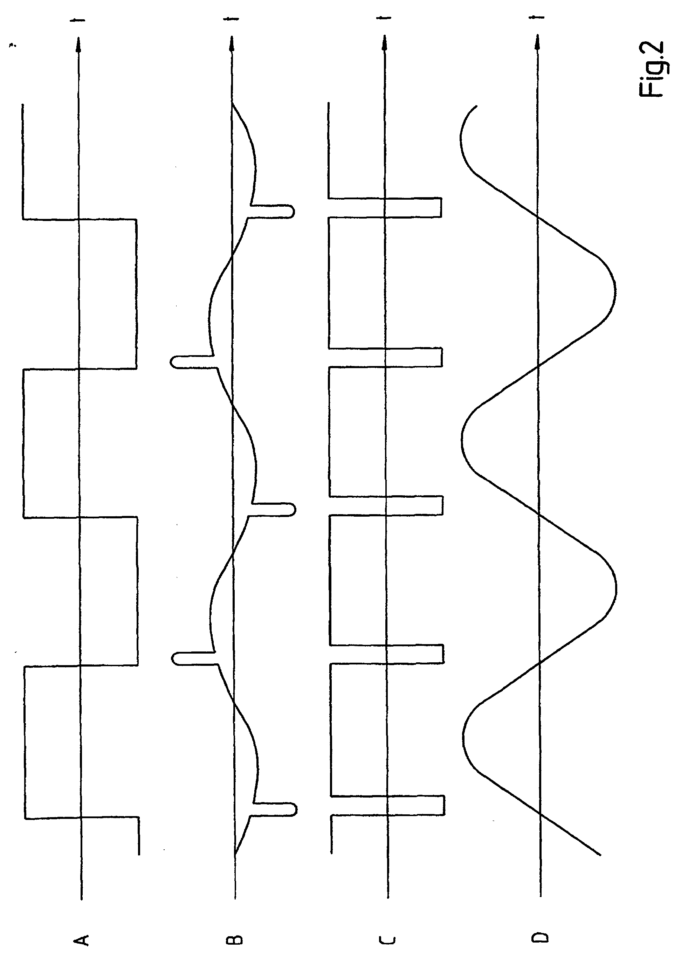

In Figur 1 ist mit 7 ein Endverstärker dargestellt, dessen Eingang mit dem Ausgang eines Komparators 8 verbunden ist. Der Komparator 8 wird vom Ausgangssignal eines Bandfilters 9 gespeist. Dieses Signal ist mit D bezeichnet und dessen zeitlicher Verlauf in Figur 2 dargestellt. Der Eingang des Bandfilters 9 ist an den Ausgang eines Eingangsverstärkers 10 geschaltet.

Der Ausgang des Endverstärkers 7 ist einerseits mit einer ersten Anschlußleitung 12 eines Vibrationsresonators 11 sowie andererseits mit dem ersten Eingang eines Exklusiv-Oder-Gatters 21 verschaltet. Des weiteren ist er mit einem an Masse 23 gelegten Tiefpaß verbunden, der aus der Reihenschaltung eines Widerstands 17 und eines Kondensators 18 besteht. Das Ausgangssignal des Endverstärkers 7 ist mit A bezeichnet und sein zeitlicher Verlauf ist der Figur 2 entnehmbar. Die zweite Anschlußleitung 14 des Vibrationsresonators 11 ist mit einer Ladestromregelschaltung 24 verbunden. Diese weist eingangsseitig einen ersten Anschluß eines Widerstandes 15 und den invertierenden Eingang eines Operationsverstärkers 16 auf, welcher mit dem Anschluß 14 des Vibrationsresonators verbunden ist. Der andere Anschluß des Widerstandes 15 ist mit dem Ausgang des Operationsverstärkers 16 verschaltet. Dessen nicht invertierender Eingang ist mit Masse 23 verbunden.

Das Signal, das am Knotenpunkt zwischen Ausgang des Operationsverstärkers 16 und des Widerstands 15 abgreifbar ist, ist mit B bezeichnet. Der zeitliche Verlauf dieses Signales B ist in Figur 2 dargestellt. Dieser Knotenpunkt ist zum einen über einen Widerstand 19 mit dem Knotenpunkt der Reihenschaltung aus Widerstand 17 und Kondensator 18 und zum anderen mit dem ersten Umschaltkontakt eines steuerbaren Umschalters 22 verbunden. Der andere Umschaltkontakt des Umschalters 22 ist an die Masse 23 geschaltet. Der Mittelkontakt des steuerbaren Umschalters 22 ist mit einer Rückkopplungsleitung 26 verbunden, die mit ihrem anderen Ende an den Eingang des Eingangsverstärkers 10 geschaltet ist. Der Knotenpunkt der Reihenschaltung aus Widerstand 17 und Kondensator 18 ist weiterhin mit dem invertierenden Eingang eines zweiten Operationsverstärkers 20 verschaltet, dessen nicht invertierender Eingang mit Masse 23 verbunden ist. Der Ausgang des Operationsverstärkers 20 ist mit dem zweiten Eingang des Exklusiv-Oder-Gatters 21 verbunden. Das Ausgangssignal des Exklusiv-Oder-Gatters 21 ist mit C bezeichnet und dessen zeitlicher Verlauf ist wiederum der Figur 2 entnehmbar. Dieses Ausgangssignal C wird dem Steueranschluß des steuerbaren Umschalters 22 zugeführt. Die erwähnten Bauelemente 17 bis 21 sind Bestandteil einer mit dem Bezugszeichen 25 bezeichneten Steuerschaltung, welche den Umschalter 22 steuert.

Im vorliegenden Ausführungsbeispiel ist das im Vibrationsresonator 11 enthaltene Schwingungselement ein einzelnes Piezoelement 13, welches zwischen Eingang und Ausgang des Vibrationsresonators 11 geschaltet ist und somit über eine Zweidrahtleitung 12 und 14 mit den übrigen Schaltungselementen verbindbar ist. Sollte dessen Schwingungsamplitude nicht ausreichend groß sein, so können diesem einen Piezoelement 13 weitere Piezoelemente elektrisch parallel sowie mechanisch in Reihe geschaltet werden.

Die Funktion dieses Ausführungsbeispiels wird anhand der charakteristischen Signalverläufe, wie sie in Figur 2 dargestellt sind, näher erläutert.

Die erfindungsgemäße Stromregelschaltung basiert auf einer Ladungskompensationsschaltung bestehend aus dem Widerstand 15 und dem Operationsverstärker 16 und ist eingangsseitig mit dem Piezoelement 13 verschaltet. Sie dient dazu, ein virtuelles Massepotential am Anschluß 14 zu erzeugen. Als Bezugspotential dient die Masse 23, welche mit dem nicht invertierenden Eingang des Operationsverstärkers 16 verbunden ist. Diese Masse 23 ist symmetrisch zur nicht dargestellten positiven und negativen Versorgungsspannung.

Die Anschlußleitung 12 des Piezoelementes 13 wird mit dem Ausgangssignal A des Endverstärkers 7 beaufschlagt. Dieses Ausgangssignal A stellt ein quasi binäres Signal dar, nämlich vorzugsweise ein Rechtecksignal, und wird im Rückkopplungszweig durch den Komparator 8 gebildet. Dieses Signal kann und wird in der Praxis eine endlich steile Steigung aufweisen. Die Darstellung der Signalformen in Figur 2 dient nur der prinzipiellen Funktionsweise der Schaltung.

Prinzipiell wird durch die erfindungsgemäße Anordnung das Piezoelement 13 zu Beginn jeder Halbperiode an die Erregerspannung A mit steil steigender Flanke angelegt. Durch die Kurzzeitwirkung der Ladungskompensationsschaltung 24 wird der Piezoumladestrom jedoch in seiner Höhe begrenzt. Die Erregerspannung A bleibt dann bis zum Ende der Halbperiode bestehen. Dadurch ändert sich die Geometrie des Piezoelements 13. Diese veränderte Geometrie bleibt dann auch bis zum Ende der Halbperiode bestehen. Die mechanischen Teile des Vibrationsresonators 11 wirken dabei als Energiespeicher nach Art einer gespannten Feder, so daß die Antriebskraft permanent über nahezu die gesamte Halbperiode hinweg auf den Vibrationsresonator einwirkt. Durch eine nachfolgende entsprechend entgegengesetzte Flanke des Erregersignals A wird der umgekehrte Vorgang eingeleitet. Auf diese Weise kann eine Oszillation des Piezoelements 13 und damit des Vibrationsresonators 11 erreicht werden.

Eine derartig wirkungsvolle Erregung kann durch eine einfache impulsförmige, nur kurzzeitig andauernde Antriebskrafteinleitung in das mechanische Vibrationselement 11 innerhalb jeder Halbperiode nicht erreicht werden, weshalb bisher eine Sensoranordnung mit nur einem Piezoelement, das gleichzeitig als ErregerElement und als Detektions-Element dient, nicht in Frage kam. Die erfindungsgemäße Anordnung löst jedoch dieses Problem.

Es folgt eine detaillierte Funktionsbeschreibung der in Figur 1 dargestellten Schaltung.

Wechselt das Signal A seine Ausgangspolarität aufgrund des Beginns einer neuen Schwingungshalbperiode, so wird das Piezoelement 13 um den Betrag des Signalhubes von A umgeladen. Aufgrund des Widerstandes 15 sowie weiterer nicht dargestellter Innenwiderstände der Schaltung, welche beispielsweise aus Gründen des Explosionsschutzes erforderlich sein können, stellt sich zunächst ein e-funktionsförmiger Umladestromverlauf durch das Piezoelement 13 ein.

Die Ladungskompensationsschaltung 24 wird dabei übersteuert, so daß die Leitung 14 während des Umladevorganges kein virtuelles Erdpotential mehr führt. Nachdem sich das Piezoelement 13 um den Betrag des Signalhubes von A umgeladen hat, gelingt es der Ladungskompensationsschaltung 24 wieder, das Potential der Leitung 14 zu stabilisieren, wodurch der Piezoumladestrom auf Null fällt. Das Piezoelement 13 wurde auf diese Weise innerhalb eines endlichen Zeitintervalls, unter Umgehung der theoretisch unendlich abklingenden e-Ladefunktion, um den Erregerspannungshub des Signals A umgeladen.

Während des verbleibenden Restes der Schwingungshalbperiode kompensiert die Ladungskompensationsschaltung 24 alle aufgrund der mechanischen Schwingbewegung des Vibrationsresonators 11 piezoelektrisch erzeugten Ladungsquanten, so daß die Spannung über dem Piezoelement 13 konstant bleibt.

Die zu Kompensationszwecken fließende Ladungsmenge erzeugt dabei über den Stromfühlwiderstand 15 einen entsprechenden Spannungsabfall, welcher am Knotenpunkt zwischen Widerstand 15 und Ausgang des Operationsverstärkers 16 als Signal B abgegriffen werden kann.

Wie in Figur 2 zu sehen ist, setzt sich das Spannungsignal B aus zwei Komponenten zusammen. Es handelt dabei einerseits um einen relativ hohen, impulsartigen Anteil, welcher während der Piezoumladephase auftritt, also dann wenn das Ausgangsignal A des Endverstärkers 7 seine Ausgangspolarität wechselt. Dieser impulsartige Anteil repräsentiert die für den Antrieb erforderlichen Wirk- und Blindströme des Piezoelements 13. Andererseits weist das Signal B einen sinusförmigen Anteil auf, welcher während der restlichen Zeitdauer erscheint und das Schwingungsdetektionssignal repräsentiert.

Zur Ausblendung der unerwünschten Piezoumladeströme wird vorzugsweise eine Austastschaltung vorgesehen.

Im Ausführungsbeispiel von Figur 1 ist diese Austastschaltung durch eine Vorrichtung zur zeitweisen vollständigen Unterdrükkung des Signals B realisiert. Hierzu dient der steuerbare Umschalter 22, der beispielsweise als Halbleiterschalter ausgebildet sein kann. Dieser Umschalter 22 wird durch die aus den Bauteilen 17 bis 21 bestehende Steuerschaltung 25 getaktet. Hierzu dient das von der Steuerschaltung 25 erzeugte Steuersignal C, welches den steuerbaren Umschalter 22 veranlaßt, mindestens während der vollständigen Dauer des Piezoumladestromimpulses das Signal B nicht in den Rückkopplungszeig 26 durchzuschalten, sondern statt dessen während dieses Zeitraumes die Rückkopplungsleitung 26 mit dem Massepotential 23 zu verbinden.

Die Erzeugung des Signales C durch die Steuerschaltung 25 erfolgt durch die Verknüpfung zweier zueinander phasenverschobener Signale mittels des Exklusiv-Oder-Gatters 21. Auf dessen einen Eingang gelangt das Ausgangssignal des Endverstärkers A unverzögert. Dem anderen Eingang wird dieses Signal A über den durch den Widerstand 17 und den Kondensator 18 gebildeten Tiefpass und den nachgeschalteten Komparator 20 zugeführt. Der ebenfalls auf den Komparatoreingang wirkende Widerstand 19 sorgt zusätzlich dafür, daß der Kondensator 18 sich erst dann über die Komparatorschwelle hinaus umladen kann, wenn im Signal B der Piezoumladeimpuls abgeklungen ist. Der Widerstand 17 ist zu diesem Zweck etwa doppelt so groß wie Widerstand 19 dimensioniert.

Die erzeugte Austastlücke im Detektionssignal ist vorzugsweise länger als der Umladeimpuls selbst, um auch den Einschwingvorgang der Ladungskompensationsschaltung 24 auf das virtuelle Massepotential vollständig mit zu unterdrücken.

Das Ausgangssignal des Halbleiterumschalters 22 wird dem aus den Stufen 7 bis 10 bestehenden Oszillatorrückkoppelkreis zugeführt. Es wird zunächst vom Eingangsverstärker 10 in der Amplitude angehoben, anschließend filtert das Bandfilter 9 die Grundwellenschwingung des Vibrationsresonators 11 heraus, welche das Zwischensignal D bildet.

Der als Nulldurchgangsdetektor wirkende Komparator 8 bestimmt aus dem Signal D das jeweilige Ende der Schwingungshalbperiode und veranlaßt daraufhin den Endverstärker 7, die Ausgangspolarität der von ihm erzeugten Erregerspannung A zu wechseln. Das binäre Schaltverhalten des Komparators 8 stellt sicher, daß die Erregerspanung A während der vollständigen Dauer jeder Schwingungshalbperiode konstant bleibt. Dies ist von entscheidender Bedeutung, da ansonsten in der Detektionssignalphase aufgrund der differenzierenden Wirkung der Kapazität des Piezoelementes 13 unerwünschte Umladeströme auftreten würden.

Die erfindungsgemäße Anordnung gestattet es auf diese Weise, mit einem einzelnen Piezoelement einen Vibrationsresonator permanent anzutreiben und bis auf Ausnahme der verhältnismäßig kurzen Austastlücke dessen Schwingung gleichzeitig zu detektieren.

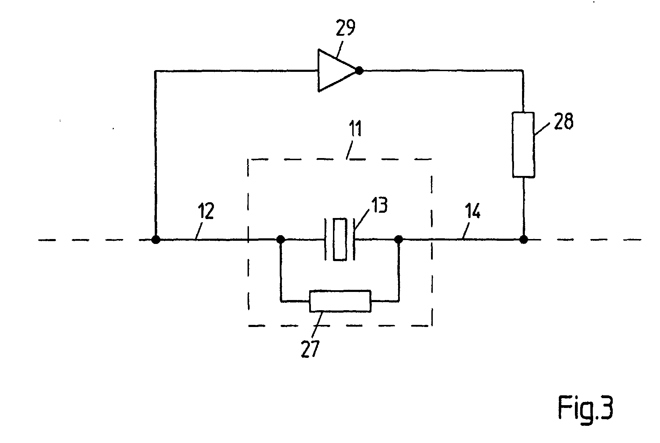

Als zusätzlich vorteilhaft erweist sich die in Figur 3 dargestellte Erweiterungsmöglichkeit der erfindungsgemäßen Anordnung. Figur 3 zeigt einen Ausschnitt der in Figur 1 dargestellten Schaltung, wobei gleiche Elemente die gleichen Bezugszeichen tragen. Zusätzlich sind folgende Elemente vorgesehen: Parallel zum Vibrationsresonator 11 ist ein Widerstand 27 geschaltet. Des weiteren ist ein Widerstand 28 vorgesehen, der einerseits mit der Anschlußleitung 14 verbunden wird und der andererseits mit dem über einen Inverter 29 geführten Erregersignal A gespeist wird.

Der antiphasig zum Signal A gespeiste Widerstand 28 kompensiert den parallel geschalteten Widerstand 27. Liegt kein Fehler vor, so heben sich beide Widerstände 27, 28 in ihrer Wirkung auf, wird eine der Piezoanschlußleitungen 12 oder 14 hingegen unterbrochen, so springt die Oszillationsschwingung des Rückkopplungskreises auf einen Frequenzwert, der durch die Verstärkeranordung 7 bis 10 bestimmt wird. Dieser Wert wird im Normalbetrieb des Vibrationsresonators 11 nie erreicht und kann somit einfach als fehlerhaft detektiert werden.

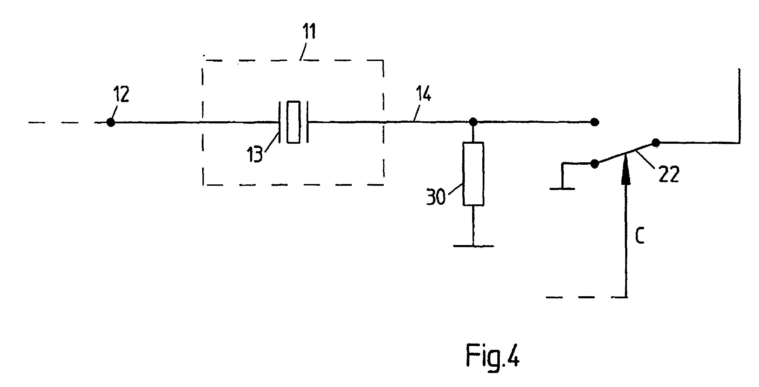

In Figur 4 ist eine vereinfachte Schaltungsanordnung der in Figur 1 dargestellten Schaltung gezeigt. Anstelle der dort vorgesehenen Ladungskompensationsschaltung 24 wird ein einfacher Widerstand 30 vorgesehen, der zwischen die zweite Anschlußleitung 14 und Massepotential geschaltet ist. Die zweite Anschlußleitung 14 des Piezoelementes 13 ist direkt mit einer ersten Eingangsklemme des Umschalters 22 in Verbindung. Die andere Eingangsklemme des Umschalters 22 ist, wie in Figur 1, auf Massepotential geschaltet. Gesteuert wird der Umschalter 22 von einem Steuersignal C, das in ähnlicher Weise, wie in Figur 1 vorgestellt, gewonnen wird. Die an dem Widerstand 30 abfallende Spannung dient als Detektionsspannung zum Erfassen der Schwingungen am Piezoelement 13. Diese Detektionsspannung wird über den Umschalter 22 dem Eingang des Verstärkers 10 zugeführt. Der Umschalter 22 wird vom Steuersignal C umgeschaltet.

Die erfindungsgemäße Anordnung ist nicht auf piezoelektrische Wandler beschränkt, sondern kann auch unter Beachtung der entsprechend dualen physikalischen Eigenschaften auf Vibrationsresonatoren mit induktiver Erregung und Detektion übertragen werden.

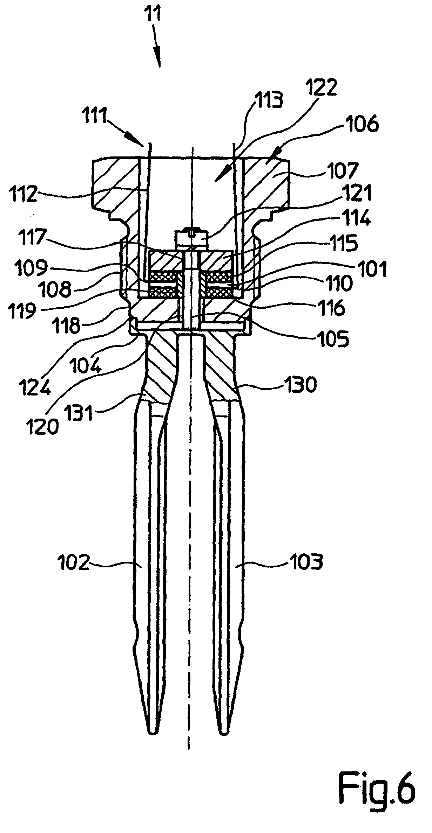

In Figur 6 ist eine Schnittansicht eines ersten beispielhaften Vibrationsresonators 11 dargestellt, welcher in die Schaltungsanordnung von Figur 1 eingesetzt werden kann. Der Vibrationsresonator 11 weist zwei im Abstand parallel voneinander angeordnete Schwingstäbe 102,103 auf, die im wesentlichen von gleicher Form und gegeneinander um ihre Längsachse 180° gedreht angeordnet sind. Die beiden Schwingstäbe 102, 103 sind an ihrem oberen Ende mit Kröpfungen 130, 131 versehen, welche auf ihrer dem Behälterinneren abgewandten Seite feststehend mit einer Membran 104 in Verbindung stehen. Die Membran 104 ist beispielsweise kreisförmig ausgebildet und an ihrem Rand an einer Halterung 106 der Vorrichtung eingespannt. Die Halterung 106 ist beispielsweise als Einschraubstück 107 ausgebildet.

Zweckmäßigerweise sind die Membran 104 und die Schwingstäbe 102, 103 einstückig aus Feinguß hergestellt und die Membran 104 ausschließlich mit ihrem äußeren Rand an die Unterseite der noch zu erläuternden Bodenplatte 118 angeschweißt. Eine solche Schweißnaht 124 bietet der Membranperipherie wegen der außerordentlich geringen Amplitude der zu übertragenden und von dem im vorliegenden Ausführungsbeispiel einzigen Piezoelement 101 der Piezoeinrichtung bereitgestellten Schwingungsenergie eine massive kraftschlüssige Abstützung.

Das Einschraubstück 107 ist, wie Figur 6 zeigt, topfförmig ausgebildet und verfügt über ein zylindrisches Außengewinde 108, mit welchem die Vorrichtung 101 in einer Wandöffnung des Behälters, dessen Füllstand festgestellt werden soll, befestigt werden kann. Hierzu ist das Einschraubstück 107 an seinem den Schwingstäben 102, 103 gegenüberliegenden Ende z.B. mit einem Sechskant versehen, um mittels eines Schraubenschlüssels in die entsprechende Öffnung der Behälterwandung eingedreht werden zu können.

Das topfförmige Einschraubstück 106 ist mit einem Hohlraum 122 ausgebildet, der an seiner der Membran 104 zugewandten Seite mit der erwähnten Bodenplatte 118 abschließt. Die Bodenplatte 118, die im Ausführungsbeispiel von Figur 1 kreisförmig gestaltet ist, ist vorzugsweise einstückig an das Einschraubstück 107 und damit die Halterung 106 angeformt und verfügt über eine zentrale Bohrung 120. Die Unterseite der Bodenplatte 118 verläuft parallel zur Membran 104 und liegt zu dieser in einem vorgegebenen Abstand, so daß sich die Membran 104 unterhalb der Bodenplatte 118 verformen kann, ohne die Bodenplatte 118 zu berühren. Die Membran 104 ist lediglich an ihrem äußeren Rand mit der Bodenplatte 118 verschweißt. Die Membran 104 kann also im vorliegenden Ausführungsbeispiel frei schwingen und wird durch keine Auflagen oder Verschraubungen bedämpft.

Auf der Oberseite der Bodenplatte 118 und damit innerhalb des Hohlraumes 122 befindet sich im Ausführungsbeispiel von Figur 6 eine als Zweipol ausgebildete Piezoeinrichtung, die als wesentlichstes Element ein einziges Piezoelement 101, das vorliegend ringförmig gestaltet ist, aufweist. Dieses ringförmige Piezoelement 101 weist an seiner Oberseite eine ringförmige Elektrode 109 und an seiner Unterseite eine ringförmige Elektrode 110 auf. Zwischen der Elektrode 110 und der Oberseite der Bodenplatte 118 ist ein Isolierring 116 angeordnet. Ein weiterer Isolierring 115 befindet sich auf der dem Piezoelement 101 abgewandten Seite der Elektrode 109. Auf dem Isolierring 115 sitzt eine Druckplatte, hier eine Druckscheibe 114 auf, die in etwa den gleichen Außenradius wie das ringförmige Piezoelement 101, die zugehörenden ringförmigen Elektroden 109, 110 und die Isolierringe 115, 116 aufweist.

Das Piezoelement 101, die beiden Elektroden 109, 110, die Isolierringe 115, 116 und die Druckscheibe 114 sind gleichachsig zueinander ausgerichtet und verfügen mittig über eine Öffnung, in der ein Zugbolzen 105 sitzt. Dieser Zugbolzen 105 ist mit seiner Unterseite feststehend an der Membran 104 und zentrisch zu dieser festgelegt, beispielsweise durch Schweißen.

Der Zugbolzen 105 ragt durch die bereits erwähnte Bohrung 120 der Bodenplatte 118 und erstreckt sich nach oben durch die Öffnungen des Isolierringes 116, der Elektrode 110, des Piezoelementes 101, der Elektrode 109, des Isolierringes 115 und der Druckscheibe 114. An seinem oberen Ende ist der Zugbolzen 105 mit einem Gewinde versehen, welches aus der Bohrung 117 der Druckscheibe 114 herausragt. Auf dieses Gewinde ist ein sich an der Druckscheibe 114 abstützendes Schraubelement 121, z.B. eine Mutter oder dergleichen, aufschraubbar, um eine vorgegebene Spannung der Membran 104 und/oder des Piezoelementes 101 einzustellen. Durch dieses Schraubelement 121 wird somit sowohl die Vorspannung des Piezoelementes 101 aufgebracht als auch zugleich eine Antriebsbefestigung erreicht.

Der Zugbolzen 105 ist im vorliegenden Ausführungsbeispiel im Bereich des Piezoelementes 101 und der Elektroden 109, 110 sowie der Isolierringe 115, 116 von einer Isolierhülse 119 umgeben. Zusätzlich ist der Zugbolzen 108 innerhalb dieser Isolierhülse 119 und den erwähnten Bohrungen 117, 120 axial verschieblich und verschwenkbar angeordnet.

Wesentlich bei der vorliegenden Erfindung ist die als Zweipol ausgebildete Piezoeinrichtung, die im Ausführungsbeispiel von Figur 6 aus einem einzigen Piezoelement 101 besteht. Die beiden Elektroden 109, 110 dieses Piezoelementes 101 sind jeweils über eine Leitungsader 112, 113, die zu einer Zuleitung 111 gehören, mit einer Steuer- und Auswerteelektronik verbindbar. Von dieser Steuer- und Auswerteelektronik wird das Piezoelement 101 abwechselnd, vorzugsweise innerhalb einer Halb-Periode der das Piezoelement 101 antreibenden Wechselspannung sowohl zur Schwingungserregung als aus zur Schwingungsdetektion herangezogen. Eine hierfür z. B. geeignete Schaltungsanordnung wurde im Zusammenhang mit den Figuren 1 bis 4 vorgestellt.

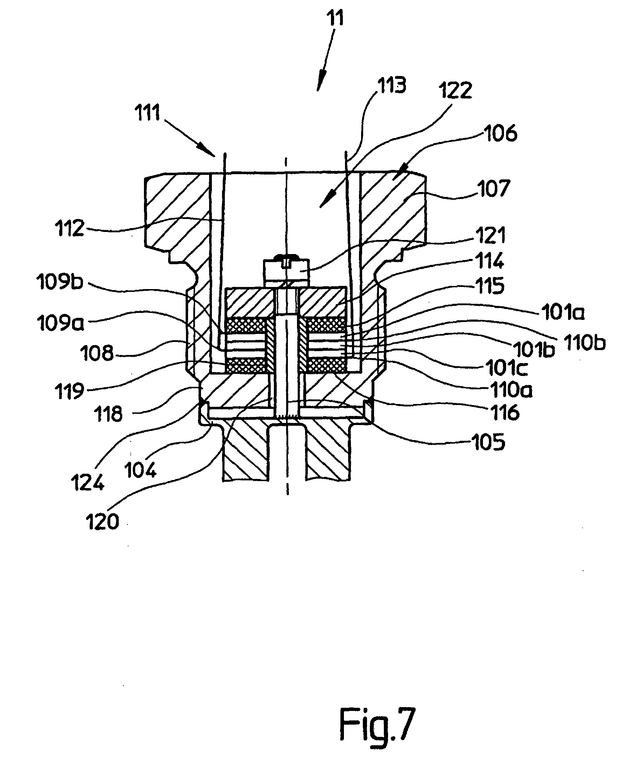

Im zweiten Ausführungsbeispiel von Figur 7 ist die Halterung 106 der Vorrichtung mit einer im Hohlraum 122 befindlichen anderen Piezoeinrichtung dargestellt. Im vorliegenden Ausführungsbeispiel sind drei ringförmige Piezoelemente 101a, 101b und 101c übereinander und damit mechanisch in Reihe angeordnet. Erfindungsgemäß sind diese drei Piezoelemente 101a, 101b und 101c elektrisch parallel geschaltet zur Bildung eines Zweipoles, welcher über die beiden Leitungsadern 112, 113 einer Zuleitung 111 mit der Steuer- und Auswerteeinheit in Verbindung steht. Der zwischen der Druckscheibe 114 und der Bodenplatte 118 angeordnete Ringstapel besteht, beginnend von der Bodenplatte 118, aus folgenden Elementen:

| | |
|---|---|
| Isolierring | 116 |
| Elektrode | 110a |
| Piezoelement | 101c |
| Elektrode | 109a |
| Piezoelement | 101b |
| Elektrode | 110b |
| Piezoelement | 101a |
| Elektrode | 109b |
| Isolierring | 115 |

Die Piezoelemente 101a, 101b und 101c sind elektrisch parallel geschaltet. Hierfür sind die beiden Elektroden 109a, 109b mit der Leitungsader 112 in Verbindung. Die beiden Elektroden 110a und 110b stehen dagegen mit der Leitungsader 113 in Kontakt.

Wenngleich bei diesem Ausführungsbeispiel mehrere Piezoelemente 101a, 101b und 101c vorgesehen sind, so sind diese Piezoelemente 101a, 101b und 101c elektrisch so geschaltet, daß von außen her gesehen diese einen Zweipol bilden.

Die vorliegende Erfindung ist nicht auf die in Figur 6 und Figur 7 gezeigten Ausführungsbeispiele beschränkt. Insbesondere ist die vorliegende Erfindung nicht auf solche Vorrichtungen beschränkt, bei denen die Bodenplatte 118 notwendigerweise von der Membran entkoppelt sein muß. Vielmehr ist die vorliegende Erfindung auch bei solchen Vorrichtungen zur Füllstandmessung einsetzbar, bei denen die Krafteinleitung der Resonatoreinrichtung in eine der Membran angeformte Schulter, wie diese z.B. in DE 41 18 793 A1 beschrieben ist, oder bei solchen Vorrichtungen anwendbar, bei denen die Krafteinleitung der Resonatoreinrichtung über zwei Druckzapfen in die Membran erfolgt. Letzteres ist beispielsweise in dem Dokument DE 39 31 453 C1 beschrieben.

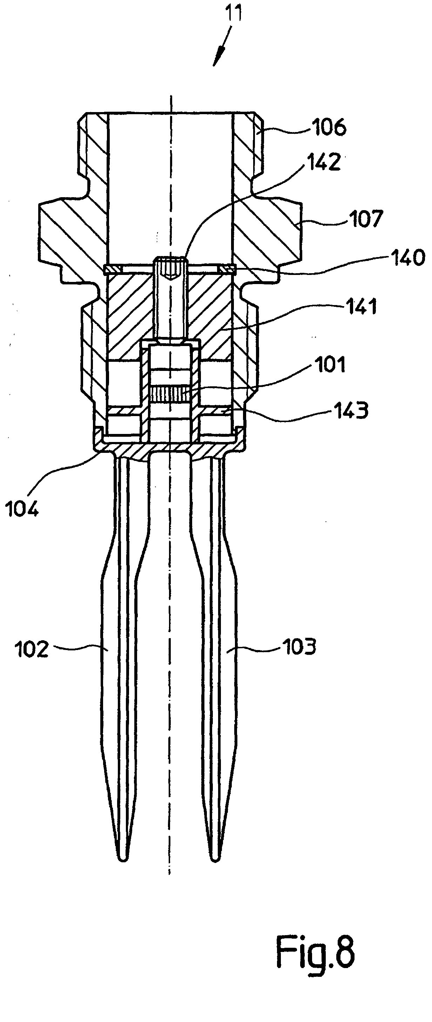

In Figur 8 ist ein weiteres Beispiel eines Vibrationsresonators 11 nach der Erfindung dargestellt. Anstelle des im Zusammenhang mit den Figuren 6 und 7 beschriebenen Zugbolzenantriebs, wird jetzt die Membran 104 mit Druck beaufschlagt. Hierfür ist das Piezoelement 101 zwischen einer mit einer Einstell-Schraube 142 versehenen Druckplatte 141 und dem Zentrum der Membran 104 eingespannt. Die Druckplatte 141 stützt sich dabei an einem Segering 140, welcher in einer Ringnut des Einschraubstückes 106 sitzt, ab. Das Piezoelement 101 selbst ist in einer rohrförmigen Halterung 143 angeordnet, welche sich an der Innenwandung des Einschraubstückes 106 abstützt. Der Antrieb der Memran 104 geschieht bei dieser Anordnung durch seitens des Piezoelementes 101 versachten Wechseldrucks, so daß die Gabelzinken 102, 103 in der einen Schwingungshalbwelle voneinander weggespreizt werden, um in der darauffolgenden wieder zurückzufedern.

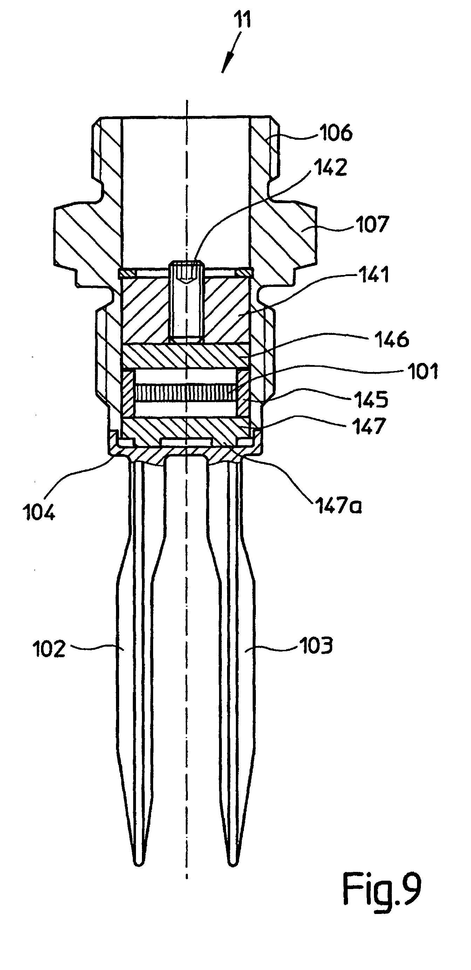

Im Ausführungsbeispiel von Figur 9 erfolgt dagegen die Krafteinleitung auf die Membran 104 unmittelbar in dem Membranbereich der Gabelzinkenbefestigung. Hierfür ist das wieder unterhalb der aus Figur 8 bekannten Druckplatte 141 angordnete Piezoelement 101 in einer rohrförmigen Halterung 145 angeordnet. Die Halterung 145 und das Piezoelement 101 sitzen zwischen zwei Platten 146, 147, wobei die untere Platte 147 eine ringförmige Schulter 147a, welche über der Gabelzinkenbefestigung sitzt, aufweist. Anstelle einer ringförmigen Schulter 147a können auch zwei über der Gabelbefestigung angordnete Zapfen an der Unterseite der Platte 147 angeformt sein.

Auch bei den vorgenannten Ausführungsbeispielen ist es im Sinne der Erfindung von wesentlicher Bedeutung, daß der Vibrationsresonator 11 als Zweipol ausgebildet ist, also entweder ein einziges Piezoelement oder einen Stapel von elektrisch parallel und mechanisch in Reihe geschalteten Piezos zur Schwingungsdetektion und -erregung aufweist.

### Bezugszeichenliste

- 1: Vibrationsresonator
- 2: Detektions-Piezoelement
- 3: Eingangsverstärker
- 4: Bandfilter
- 5: Endverstärker
- 6: Erreger-Piezoelement
- 7: Endverstärker
- 8: Komparator
- 9: Bandfilter

- 10: Eingangsverstärker
- 11: Vibrationsresonator
- 12: Anschlußleitung
- 13: Piezoelement
- 14: Anschlußleitung
- 15: Widerstand
- 16: OP-Verstärker
- 17: Widerstand
- 18: Kondensator
- 19: Widerstand
- 20: OP-Verstärker
- 21: Exor-Gatter
- 22: Umschalter
- 23: Masse
- 24: Ladestromregelschaltung
- 25: Steuerschaltung
- 26: Rückkopplungsleitung
- 27: Widerstand
- 28: Widerstand
- 29: Inverter
- 30: Widerstand
- 101: Piezoelement
- 101a: Piezoelement
- 101b: Piezoelement
- 101c: Piezoelement
- 102: Schwingstab
- 103: Schwingstab
- 104: Membran
- 105: Zugbolzen
- 106: Halterung
- 107: Einschraubstück
- 108: Außengewinde
- 109: Elektrode
- 109a: Elektrode
- 109b: Elektrode
- 110: Elektrode
- 110a: Elektrode
- 110b: Elektrode
- 111: Zuleitung
- 112: Leitungsader
- 113: Leitungsader
- 114: Druckscheibe
- 115: Isolierung
- 116: Isolierung
- 117: Bohrung
- 118: Bodenplatte
- 119: Isolierhülse
- 120: Bohrung
- 121: Schraubelement
- 122: Hohlraum
- 124: Schweißnaht
- 130: Kröpfung
- 131: Kröpfung
- 140: Segering
- 141: Druckplatte
- 142: Inbusschraube
- 143, 145: Halterung
- 146,147: Platten
- 147a: Schulter
- A: Signal, Erregerspannung
- B: Signal
- C: Steuersignal
- D: Signal

## Patentansprüche

1. Vibrationsresonator zur Füllstandauswertung mit einem an einer Halterung (106) angeordneten mechanischen Schwingungssystem, das mindestens zwei Schwingstäbe (102, 103) aufweist, die im Abstand zueinander an einer am Rand festgelegten Membran (104) befestigt sind, mit einer auf der den Schwingstäben (102, 103) abgewandten Seite der Membran (104) angeordneten Einrichtung zur Erregung der Schwingstäbe (102, 103) und zur Detektion der Schwingungen der Schwingstäbe (102, 103), wobei die Einrichtung mindestens ein Piezoelement aufweist, sowie mit einer aus der Halterung (106) führenden Zuleitung (111), welche die Einrichtung mit einer elektronischen Steuer- und Auswerteeinheit verbindet, **dadurch gekennzeichnet, dass** die Einrichtung ein elektrischer Zweipol mit zwei Elektroden (109, 110) ist, dass die Zuleitung (111) zu dem Zweipol eine Zweidrahtleitung (111) mit zwei Leitungsadern (112, 113) ist, und dass die Zweidrahtleitung (111) im Betrieb des Vibrationsresonators zur Schwingungserregung permanent an ein Erregungssignal geschaltet und bis auf Ausnahme von Austastlücken gleichzeitig ein Schwingungsdetektionssignal an der Zweidrahtleitung (111) abgreifbar ist.

2. Vibrationsresonator nach Anspruch 1, **dadurch gekennzeichnet, dass** der Zweipol mindestens zwei Piezoelemente (101a, 101b) mit jeweils Elektroden (109a, 109b, 110a, 110b) aufweist, und dass diese Piezoelemente (101a, 101b) mechanisch in Reihe angeordnet und mit ihren Elektroden (109a, 109b, 110a, 110b) elektrisch parallel geschaltet sind.

3. Vibrationsresonator nach Anspruch 1 oder 2, **dadurch gekennzeichnet, dass** das Piezoelement (101) oder die Piezoelemente (101a, 101b) als ringförmige Piezoelemente mit ringförmigen Elektroden (109a, 109b, 110a, 110b) ausgebildet sind.

4. Vibrationsresonator nach Anspruch 3, **dadurch gekennzeichnet, dass** innerhalb der Halterung (106) ein Zugbolzen (105) angeordnet ist, welcher sich orthogonal zur Membran (104) erstreckt und mit seinem unteren Ende zentrisch an der Membran (104) mit dieser feststehend verbunden ist, dass der Zugbolzen (105) durch das oder die ringförmige(n) Piezoelement(e) (101; 101a, 101b, 101c) mit den ringförmigen Elektroden (109, 110; 109a, 109b, 110a, 110b) ragt und mit seinem oberen Ende mittig an einer Druckplatte (114) angekoppelt ist.

5. Vibrationsresonator nach Anspruch 4, **dadurch gekennzeichnet, dass** das ringförmige Piezoelement (101) oder die mechanisch in Reihe angeordnete Piezoelemente (101a, 101b, 101c) zwischen einer beabstandet über der Membran (104) feststehenden Bodenplatte (118) und der Druckplatte (114) angeordnet sind.

6. Vibrationsresonator nach Anspruch 4 oder 5, **dadurch gekennzeichnet, dass** der Zugbolzen (105) axial verschieblich und verschwenkbar angeordnet ist, dass die untere Ringfläche des ringförmigen Piezoelementes (101) von der Membran (104) entkoppelt ist und auf der Bodenplatte (118) aufsitzt, welche eine zentrale Bohrung (120) aufweist, durch die sich der Zugbolzen (105) erstreckt und welche mit der Halterung (106) verbunden ist.

7. Vibrationsresonator nach einem der Ansprüche 1 bis 6, **dadurch gekennzeichnet, dass** an der Oberseite und an der Unterseite des Piezoelementes (101) oder der mechanisch in Reihe angeordnete Piezoelemente (101a, 101b) ein Isolierring (115, 116) angeordnet ist.

8. Vibrationsresonator nach einem der Ansprüche 1 bis 7, **dadurch gekennzeichnet, dass** die Halterung (106) ein Einschraubstück (107) mit Außengewinde (108) aufweist.

9. Vibrationsresonator nach einem der Ansprüche 4 bis 8, **dadurch gekennzeichnet, dass** die Druckplatte (114) eine das mindestens eine ringförmige Piezoelement (101) überspannende Scheibe mit zentraler Bohrung (117), durch welche sich der Zugbolzen (105) erstreckt, ist.

10. Vibrationsresonator nach einem der Ansprüche 4 bis 9, **dadurch gekennzeichnet, dass** der Zugbolzen (105) an-seinem der Membran (104) abgewandten und sich durch die Druckscheibe (114) erstreckenden Ende mit einem Gewinde versehen ist, auf welchem. ein sich an der Druckscheibe (114) abstützendes Schraubelement (121) aufschraubbar ist.

## Claims

1. A vibration resonator for liquid level evaluation with a mechanical vibration system disposed on a mounting (106), which has at least two vibrating bars (102, 103), which are fixed spaced from one another on a diaphragm (104) fixed at the edge, with a device disposed on the side of the diaphragm (104) faced away from the vibrating bars (102, 103) to energise the vibrating bars (102, 103) and to detect the vibrations of the vibrating bars (102, 103), wherein the device comprises at least one piezoelectric element, and also with a lead (111) leading out of the mounting (106), which connects the device with an electronic control and evaluation unit,
**characterised in that** the device is an electric two-terminal having two electrodes (109, 110),
**in that** the lead (111) to the two-terminal is a two-wire line (111) with two wires (112, 113),
and **in that** during the operation of the vibration resonator the two-wire line (111) is permanently connected to an exciting signal for vibration excitation and with the exception of blanking intervals a vibration detection signal can be simultaneously tapped at the two-wire line (111).

2. A vibration resonator according to Claim 1,
**characterised in that** the two-terminal comprises at least two piezoelectric elements (101a, 101b) with in each case electrodes (109a, 109b, 110a, 110b),
**and in that** these piezoelectrical elements (101a, 101b) are arranged mechanically in series and by their electrodes (109a, 109b, 110a, 110b) are connected electrically in parallel.

3. A vibration resonator according to Claim 1 or.2,
**characterised in that** the piezoelectric element (101) or the piezoelectric elements (101a, 101b) are constructed as annular piezelectric elements with annular electrodes (109a, 109b, 110a, 110b).

4. A vibration resonator according to Claim 3,
**characterised in that** disposed inside the mounting (106) is a holding bolt (105), which extends orthogonally to the diaphragm (104) and by its lower end centrally at the diaphragm (104) is firmly fixed thereto,
**in that** the holding bolt (105) protrudes through the annular piezoelectric element(s) (101; 101a, 101b, 101c) with the annular electrodes (109, 110; 109a, 109b, 110a, 110b) and by its upper end is centrally coupled to a pressure plate (114).

5. A vibration resonator according to Claim 4,
**characterised in that** the annular piezoelectric element (101) or the piezoelectric elements (101a, 101b, 101c) disposed mechanically in series are disposed between a base plate (118) fixed spaced above the diaphragm (104) and the pressure plate (115).

6. A vibration resonator according to Claim 4 or 5,
**characterised in that** the holding bolt (105) is axially moveable and swivellably disposed,
**in that** the lower annular face of the annular piezoelectric element (101) is uncoupled from the diaphragm (104) and is seated on the base plate (118), which has a central bore (120) through which the holding bolt (105) extends and which is connected to the mounting (106).

7. A vibration resonator according to one of Claims 1 to 6,
**characterised in that** an insulating ring (115, 116) is disposed at the upper side and at the under side of the piezoelectric element (101a, 101b) or of the piezoelectric elements (101a, 101b) disposed mechanically in series.

8. A vibration resonator according to one of Claims 1 to 7,
**characterised in that** the mounting (106) comprises a screw-in piece (107) with external thread (108).

9. A vibration resonator according to one of Claims 4 to 8,
**characterised in that** the pressure plate (114) is a disk that spans at least one annular piezoelectric element (101) with central bore (117) through which the holding bolt (105) extends.

10. A vibration resonator according to one of Claims 4 to 9,
**characterised in that** at its end facing away from the diaphragm (104) and extending through the pressure disk (114), the holding bolt (105) is provided with a thread on which a screw element (121) supported on the pressure disk (114) can be screwed.

## Revendications

1. Résonateur vibrant pour déterminer un niveau de remplissage, comportant un système vibrant, mécanique installé sur un support (106), ayant au moins deux tiges vibrantes (102, 103) écartées l'une de l'autre et fixées à une membrane (104) fixée par le bord, avec une installation prévue sur la face de la membrane (104) opposée aux tiges vibrantes (102, 103) pour exciter les tiges vibrantes (102, 103) et pour détecter les vibrations des tiges (102, 103), cette installation comportant au moins un élément piezo-électrique ainsi qu'une ligne d'alimentation (111) sortant du support (106) et reliant l'installation à une unité de commande et d'exploitation électronique,
**caractérisé en ce que**
l'installation est un dipôle électrique à deux électrodes (109, 110),
la ligne d'alimentation du dipôle étant une ligne à deux conducteurs (111) comportant deux conducteurs (112, 113), et
la ligne à deux conducteurs (111) est branchée à un fonctionnement du résonateur vibrant pour lui fournir en permanence un signal d'excitation pour vibrer eL à l'exception des intervalles de détection, cette ligne (111) permet également de fournir un signal de détection de vibration.

2. Résonateur vibrant selon la revendication 1,
**caractérisé en ce que**
le dipôle comporte au moins deux éléments piezo-électriques (101a, 101b) avec chaque fois des électrodes (109a, 109b, 110a, 110b) et ces éléments piczo-électriques (101a, 101b) sont branchés mécaniquement en série et leurs électrodes (109a, 109b, 110a, 110b) sont branchées électriquement en parallèle.

3. Résonateur vibrant selon les revendications 1 ou 2,
**caractérisé en ce que**
l'élément piezo-électrique (101) ou les éléments piezo-électriques (101a, 101b) sont des éléments piezo-électriques annulaires avec des électrodes annulaires (109a, 109b, 110a, 110b).

4. Résonateur vibrant selon la revendication 3,
**caractérisé en ce qu'**
à l'intéricur du support (106) on a un goujon de traction (105) orthogonal à la membrane (104) et dont l'extrémité inférieure est reliée de manière ccntrée à la membrane (104), solidairement à celle-ci et le goujon de traction (105) traverse le ou les éléments piezo-électriques annulaires (101, 101a, 101b, 101c) avec les électrodes annulaires (109, 110; 109a, 109b, 110a, 110b) et son extrémité supérieure est couplée au milieu d'une plaque de poussée (114).

5. Résonateur vibrant sclon la revendication 4,
**caractérisé en ce que**
l'élément piezo-électrique annulaire (101) ou les éléments piezo-électriques (101a, 101b, 101c) branchés mécaniquement en série; sont installés entre une plaque de fond (118) fixe, distante, par l'intermédiaire de la membrane (104) et la plaquc de pression (114).

6. Résonateur vibrant selon les revendications 4 ou 5,
**caractérisé en ce que**
le goujon de traction (105) est coulissant axialement et peut pivoter et la surface annulaire inférieure de l'élément piezo-électrique annulaire (101) est découplée de la membrane (104) et s'appuie sur la plaque de fond (118) comportant un perçage central (120) travcrsé par les goujons (105) et relié au support (106).

7. Résonateur vibrant selon l'une des revendications 1 à 6,
**caractérisé en ce qu'**
un anneau isolant (115, 116) est prévu sur le côté supérieur et sur le côté inférieur de l'élément piézo-électriquc (101) ou des éléments piézo-électriques (101a, 101b) branchés mécaniquement en série.

8. Résonateur vibrant selon l'une des revendications 1 à 7,
**caractérisé en ce que**
le support (106) comporte une pièce filetée (107) avec un filetage extérieur (108).

9. Résonateur vibrant selon l'une des revendications 4 à 8,
**caractérisé en ce que**
le plateau de pression (114) est un disque chevauchant au moins un élément piezo-électrique annulaire (101) avec un perçage central (117) traversé par le goujon de traction (105).

10. Résonateur vibrant selon l'une des revendications 4 à 9,
**caractérisé en ce qu**e
le goujon de traction (105) comporte à son extrémité opposée à la membrane (104) et s'étend à travers le disque de pression (114) par son extrémité filetée recevant un élément de vissage (121) s'appuyant contre le disque de pression (114).
